# EUROPEAN PATENT SPECIFICATION

(11) **EP 2 442 177 B1**
(45) Date of publication and mention of the grant of the patent: **19.06.2013**
(21) Application number: 11184693.7
(22) Date of filing: 11.10.2011
(51) Int. Cl.: G02F 1/13, G02B 6/00

(54) **Backlight unit and liquid crystal display device**
Rückbeleuchtungseinheit und Flüssigkristallanzeigevorrichtung
Unité de rétroéclairage et dispositif d'affichage à cristaux liquides

(30) Priority: 12.10.2010 JP 2010230075
(43) Date of publication of application: 18.04.2012
(73) Proprietor: Hitachi Displays, Ltd., Mobara-shi Chiba (JP); Panasonic Liquid Crystal Display Co., Ltd., Shikama-ku, Himeji-shi Hyogo 672-8033 (JP)
(72) Inventor: Wakita, Shoichi, Chiba, 297-8622 (JP); Suzuki, Nobuyuki, Chiba, 297-8622 (JP)
(74) Representative: Beetz & Partner

(56) References cited:
- US-A1- 2005 036 335
- US-A1- 2005 099 555
- US-A1- 2006 203 519
- US-A1- 2006 290 836

## Description

### BACKGROUND OF THE INVENTION

### 1. Field of the Invention

The present invention relates to a backlight unit and a liquid crystal display device, and more particularly to a technology that reduces relative positional displacements of members configuring the backlight unit.

### 2. Description of the Related Art

The backlight unit of a liquid crystal display device disclosed in JP 2009-192769A includes a light guide plate, and an inner frame molded from a resin that surrounds an outer circumstance of the light guide plate. The liquid crystal display panel arranged on the front side of the light guide plate is put inside the inner frame, and attached to the inner frame. The backlight unit disclosed in JP 2009-192769A also includes an outer frame inside which the inner frame is put. The outer frame is made of metal, and increases the strength of the liquid crystal display device.

In the above structure, respective clearances are provided between the inner frame and the light guide plate, and between the inner frame and the outer frame. The clearances enable the light guide plate to be easily assembled with the inner frame, and also enable the inner frame to be easily assembled with the outer frame.

US2006/0203519 and US2006/0290836 disclose also backlight structures in which a inner frame, having inner and outer protrusions formed thereon, holds a light guide through the inner protrusions and is fixed to an outer frame through the outer protrusions.

### SUMMARY OF THE INVENTION

However, because the clearances are provided in the above related art structure, there arises such a problem that positional displacements are liable to occur among the inner frame, the light guide plate, and the outer frame, thereby leading to the positional displacement of a display area.

The present invention has been made in view of the above problem, and an object of the present invention is to provide a backlight unit that can suppress relative positional displacements of members while ensuring the ease of assembling, and provide a liquid crystal display device including the backlight unit.

In order to solve the above problem, the invention proposes a backlight unit according to claim 1 and a display device comprising the same. According to one aspect of the present invention, there is provided a backlight unit for a liquid crystal display device includes a light guide plate, an inner frame that surrounds an outer periphery of the light guide plate, and an outer frame that surrounds an outer periphery of the inner frame. An inner periphery of the inner frame has an inner protrusion formed thereon and projecting toward the outer periphery of the light guide plate, and one of the outer periphery of the inner frame and an inner periphery of the outer frame has an outer protrusion formed thereon and projecting toward the other one. The inner protrusion and the outer protrusion are respectively located on opposite sides to each other across one side part of the inner frame, and arranged at a distance from each other in a longitudinal direction of the one side of the inner frame.

Also, in order to solve the above problem, the liquid crystal display device according to the present invention includes the backlight unit.

According to the present invention, the positional displacement of the light guide plate relative to the inner frame can be suppressed by the inner protrusion. Also, the positional displacement of the inner frame relative to the outer frame can be suppressed by the outer protrusion. Further, in the present invention, the inner protrusion and the outer protrusion are located at the distance from each other in the longitudinal direction of one side of the inner frame. For that reason, in assembling those three members together, the one side part of the inner frame can be recessed so that the ease of assembling can be ensured. For example, when the inner frame with the light guide plate fitted thereto is fitted into the outer frame, a portion of the inner frame where the outer protrusion is formed (or a portion against which the outer protrusion is abutted) can be recessed. As a result, those two members can be fitted into the outer frame.

According to one aspect of the present invention, the inner protrusion may be abutted against the outer periphery of the light guide plate. According to this aspect, the positional displacement of the light guide plate relative to the inner frame can be more surely suppressed.

Also, according to another aspect of the present invention, plural inner protrusions each functioning as the inner protrusion may be formed on the inner periphery of the inner frame. According to this aspect, a position of the light guide plate can be further stabilized within the inner frame.

Also, according to still another aspect of the present invention, one of the outer periphery of the inner frame and the inner periphery of the outer frame may have plural outer protrusions each functioning the outer protrusion. According to this embodiment, a position of the inner frame can be further stabilized within the outer frame.

Also, according to yet still another aspect of the present invention, the one of the outer periphery of the inner frame and the inner periphery of the outer frame may have a second outer protrusion formed thereon and projecting toward the other one, and the second outer protrusion may be located outside the opposite side part to the one side part of the inner frame. According to this aspect, the positional displacement of the inner frame relative to the outer frame can be further effectively suppressed.

Also, in this aspect, the opposite side part of the inner frame may have a second inner protrusion formed thereon and projecting toward the outer periphery of the light guide plate. According to this aspect, the positional displacement of the light guide plate relative to the inner frame can be further effectively suppressed.

In this aspect, the second inner protrusion and the second outer protrusion may be located symmetrically about the opposite side part to the one side part of the inner frame. With this configuration, the second inner protrusion can prevent a portion of the inner frame where the second outer protrusion is formed (or a portion against which the second outer protrusion is abutted) from being recessed. For that reason, the inner frame is hardly come off from the outer frame.

Also, according to yet still another aspect of the present invention, the outer protrusion may be engaged with the other one of the outer periphery of the inner frame and the inner periphery of the outer frame. According to this aspect, the inner frame can be prevented from being separated from the outer frame.

Also, in this aspect, the other one of the outer periphery of the inner frame and the inner periphery of the outer frame may have a hole formed thereon into which the outer protrusion is fitted. With this configuration, the separation of the inner frame from the outer frame can be further effectively suppressed. Also, a clearance between the outer periphery of the inner frame and the inner periphery of the outer frame can be reduced. Further, even when the clearance between the outer periphery of the inner frame and the inner periphery of the outer frame is reduced, the inner frame can be fitted into the outer frame by depressing a portion of the inner frame where the outer protrusion is formed (or a portion against which the outer protrusion is abutted), and the ease of assembling can be ensured.

### BRIEF DESCRIPTION OF THE DRAWINGS

FIG. 1 is an exploded perspective view of a liquid crystal display device having a backlight unit according to an embodiment of the present invention;
FIG. 2 is a plan view of the backlight unit in which only a light guide plate, an inner frame, and an outer frame in the backlight unit are illustrated;
FIG. 3 is a cross-sectional view taken along a line III-III illustrated in FIG. 2;
FIG. 4 is an enlarged view of a main portion of FIG. 2 in which protrusions formed on the inner frame are illustrated;
FIG. 5 is a plan view of a backlight unit according to an example not according to the present invention;
FIG. 6 is a plan view of a backlight unit according to a second embodiment of the present invention;
FIG. 7 is a plan view of a backlight unit according to a third embodiment of the present invention;
FIG. 8 is a plan view of a backlight unit according to a fourth embodiment of the present invention; and
FIG. 9 is a plan view of a backlight unit according to an example not according to the present invention.

### DETAILED DESCRIPTION OF THE INVENTION

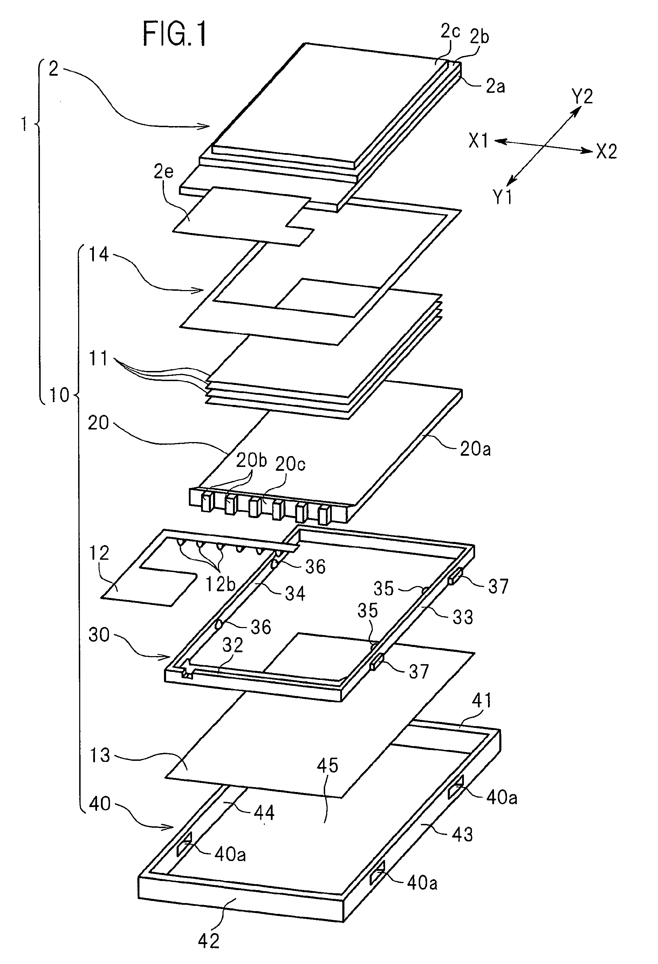

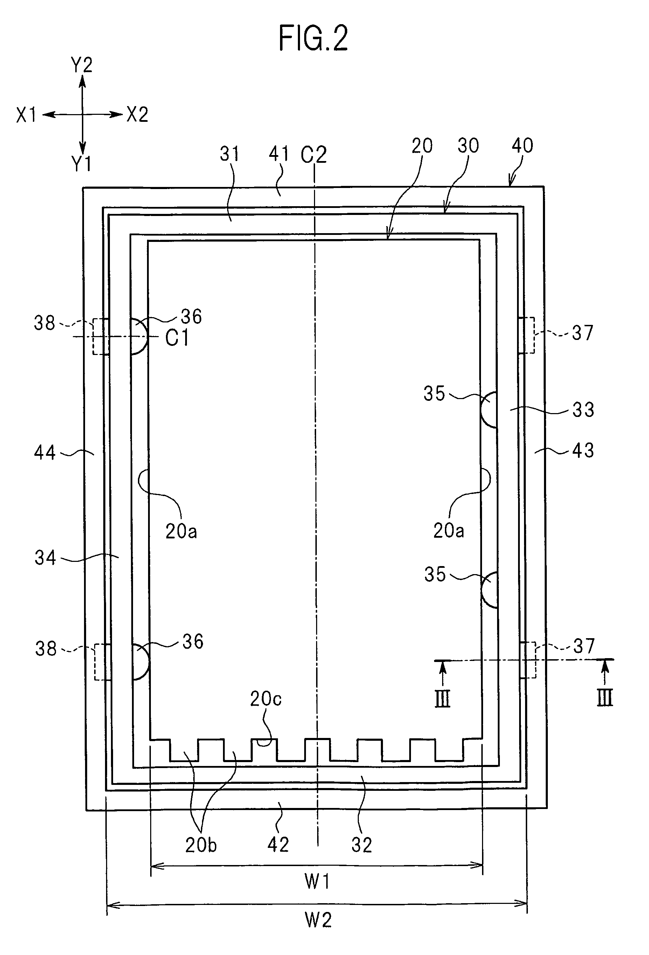

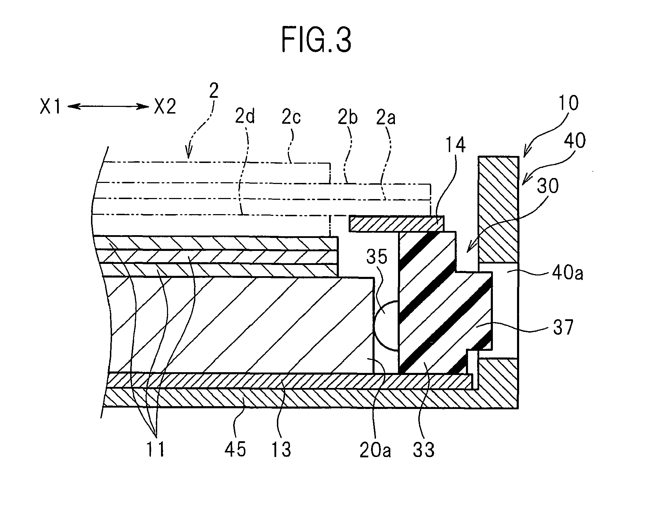

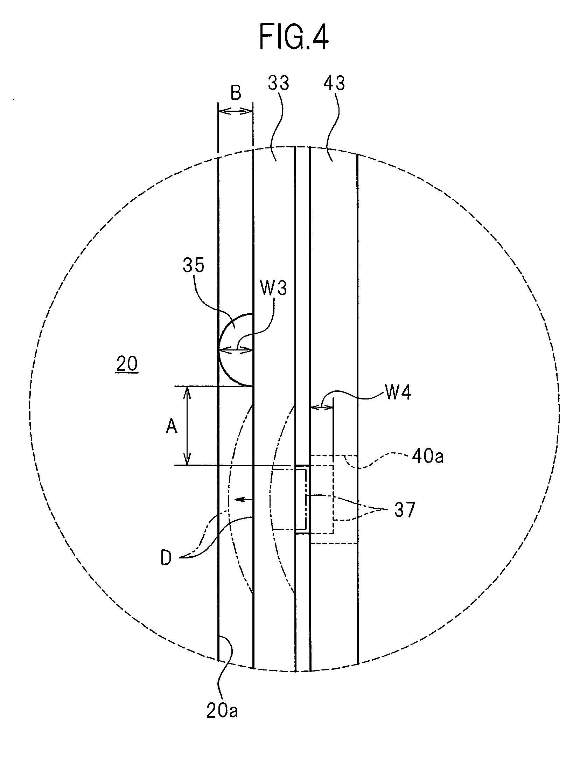

Hereinafter, an embodiment of the present invention will be described with reference to the accompanying drawings. FIG. 1 is an exploded perspective view of a liquid crystal display device 1 having a backlight unit 10 according to the embodiment of the present invention. FIG. 2 is a plan view of the backlight unit 10. FIG. 2 illustrates a light guide plate 20, an inner frame 30, and an outer frame 40 configuring the backlight unit 10. FIG. 3 is a cross-sectional view of the backlight unit 10 taken along a line III-III illustrated in FIG. 2. FIG. 4 is an enlarged view of a main portion of FIG. 2 in which a first inner protrusion 35 and a first outer protrusion 37 formed on the inner frame 30 are illustrated. In the following description, it is assumed that a direction along which a liquid crystal display panel 2 and the backlight unit 10 face each other is a vertical direction (up-down direction). Also, in FIG. 1, it is assumed that a direction indicated by X1-X2 is a lateral direction (right-left direction), and a direction indicated by Y1-Y2 is a longitudinal direction (front-rear direction).

As illustrated in FIG. 1, the liquid crystal display device 1 includes the liquid crystal display panel 2 and the backlight unit 10 that illuminates the liquid crystal display panel 2 on the back side thereof. The liquid crystal display device 1 is a small display device mounted in mobile devices such as cellular phones, digital cameras, or PDAs (personal data assistances).

The liquid crystal display panel 2 includes a pair of substrates 2a and 2b (glass substrates) having a light transparency. Liquid crystal is put between those substrates 2a and 2b. The substrate 2a had thin film transistors, electrodes, wirings and the like each formed thereon, and the substrate 2b has color filters formed thereon. The substrate 2a has a flexible printed circuit board 2e attached thereto on which an integrated circuit for driving the transistors, and the like are mounted. In this example, the flexible printed circuit board 2e is attached to a front edge of the substrate 2a. Polarizing plates 2c and 2d are attached to a front side and a back side of the substrates 2a and 2b, respectively (refer to FIG. 3).

As illustrated in FIG. 1, the backlight unit 10 includes a flexible printed circuit board 12, the light guide plate 20, plural optical sheets 11, and a reflection sheet 13. Also, the backlight unit 10 includes the inner frame 30 and the outer frame 40.

Plural light sources (for example, LEDs (light emitting diodes)) 12b are mounted on the circuit board 12. In this example, the light sources 12b are arranged on a back side of the circuit board 12. Also, the circuit board 12 is arranged so that the light sources 12b face a front portion 20c of an outer periphery (surface corresponding to the thickness of the light guide plate 20) of the light guide plate 20. The circuit board 12 is attached to a front edge of the light guide plate 20. For example, as illustrated in FIG. 1, protrusions 20b are formed on the front portion 20c of the outer periphery, and the circuit board 12 is attached onto upper surfaces of the protrusions 20b.

A mounting structure of the circuit board 12 onto the light guide plate 20, and the position of the light sources 12b are not limited to the configuration described above, but may be appropriately changed. For example, without provision of the circuit board 12, the light sources 12b may be mounted on the circuit board 2e attached to the liquid crystal display panel 2. In this case, the circuit board 2e is bent so that the light sources 12b face the outer periphery of the light guide plate 20.

The light guide plate 20 is a substantially rectangular plate. The light guide plate 20 is made of a material (for example, acrylic resin) having a light permeability and a light diffuseness. For that reason, a light from the light sources 12b is diffused over an overall area of the light guide plate 20 while being diffusely reflected within the light guide plate 20, whereby the light guide plate 20 emits light from the surface thereof. That is, the light guide plate 20 substantially uniformly emits the light from the overall surface thereof.

The plural optical sheets 11 are layered on the light guide plate 20. The optical sheets 11 include, for example, a diffusion sheet and a prism sheet. The liquid crystal display panel 2 is arranged above the optical sheets 11 (refer to FIG. 3).

The reflection sheet 13 is arranged on a back surface (lower surface side) of the light guide plate 20. An outer peripheral part of the reflection sheet 13 is attached to the back surface of the inner frame 30.

The inner frame 30 surrounds the outer periphery of the light guide plate 20. The inner frame 30 is rectangular, and includes an upper wall part 31, a lower wall part 32, a right wall part 33, and a left wall part 34 (refer to FIG. 2). Those wall parts 31, 32, 33, and 34 are each formed into an elongate bar with rectangle in cross section (cross section taken along a surface orthogonal to a longitudinal direction thereof), and are coupled to each other to form the rectangular inner frame 30. The inner frame 30 is molded integrally from resin. The inner frame 30 can be elastically deformed so that the part thereof is recessed as described later. The material of the inner frame 30 is not always limited to resin if the material allows such elastic deformation.

As illustrated in FIG. 3, the outer peripheral part of the liquid crystal display panel 2 is disposed on the inner frame 30, and thereby the liquid crystal display panel 2 is supported by the inner frame 30. A double-faced adhesive tape 14 is disposed on the upper surface (upper surfaces of the respective wall parts 31, 32, 33, and 34) of the inner frame 30. The tape 14 is shaped into a rectangle frame having a size corresponding to the inner frame 30 (refer to FIG. 1). The outer peripheral part of the liquid crystal display panel 2 is attached to the upper surface of the inner frame 30 through the tape 14.

The outer frame 40 is so formed as to surround the outer periphery of the inner frame 30. In this example, the outer frame 40 is formed in a box shape open upward as illustrated in FIG. 1 or 3, and stores the inner frame 30 and the light guide plate 20 therein. The outer frame 40 includes a rectangular bottom plate part 45. The light guide plate 20 and the inner frame 30 are arranged on the bottom plate part 45. Also, the outer frame 40 includes a frame-shaped outer peripheral wall that stands on the edge of the bottom plate part 45 and surrounds the outer periphery of the inner frame 30. The outer peripheral wall is rectangular as a whole, and includes an upper wall part 41, a lower wall part 42, a right wall part 43, and a left wall part 44 as four sides thereof. The outer frame 40 is made of metal, and ensures the rigidity of the backlight unit 10. Also, when the backlight unit 10 is mounted in a device such as a cellular phone, the outer frame 40 is fixed to a housing of the device. The material of the backlight unit 10 is not always limited to metal if the material can ensure the rigidity of the backlight unit 10.

As illustrated in FIG. 2, the inner periphery (surface facing the outer periphery of the light guide plate 20) of the inner frame 30 has plural protrusions 35 and 36 formed thereon and projecting inwardly toward side surfaces 20a in the outer periphery of the light guide plate 20. Those protrusions 35 and 36 are molded integrally with the inner frame 30.

The respective protrusions 35 and 36 are formed on two sides (two wall parts) of the inner frame 30 which are located opposite to each other. In this example, the plural (two in FIG. 2) protrusions 35 (hereinafter referred to as "first inner protrusions") are formed on the right wall part 33. Those two protrusions 35 are located at a distance from each other in a longitudinal direction (in this example, the longitudinal direction (the direction of Y1-Y2)) of the right wall part 33. Also, the plural (two in FIG. 2) protrusions (hereinafter referred to as "second inner protrusions") 36 are formed on the left wall part 34 located opposite to the right wall part 33 of the light guide plate 20. Those two protrusions 36 are located at a distance from each other in a length direction (longitudinal direction) of the left wall part 34.

The light guide plate 20 is disposed between the first inner protrusions 35 and the second inner protrusions 36. For that reason, a gap B (refer to FIG. 4) is formed between the side surfaces 20a of the light guide plate 20 and the inner periphery of the inner frame 30 (specifically, an inner surface of the right wall part 33 and an inner surface of the left wall part 34).

Alternatively, a larger number of the first inner protrusions 35 and a larger number of the second inner protrusions 36 may be formed on the right wall part 33 and the left wall part 34, respectively. Similarly, in this case, the plural first inner protrusions 35 are located at distances from each other in the longitudinal direction of the right wall part 33, and the plural second inner protrusions 36 are located at distances from each other in the longitudinal direction of the left wall part 34.

In this example, a distance between the first inner protrusions 35 and the second inner protrusions 36 in a direction along which the right wall part 33 and the left wall part 34 face each other (lateral direction in this example) substantially matches a width W1 of the light guide plate 20. For that reason, tips of the first inner protrusions 35 and tips of the second inner protrusions 36 are abutted against the side surfaces 20a of the light guide plate 20, respectively. The light guide plate 20 is held between the first inner protrusions 35 and the second inner protrusions 36. With this configuration, the positional displacement of the light guide plate 20 relative to the inner frame 30 is restricted.

A slight gap may be formed between the tips of the first inner protrusions 35 and the side surface 20a of the light guide plate 20, and between the tips of the second inner protrusions 36 and the side surface 20a of the light guide plate 20. Similarly, in this case, the positional displacement of the light guide plate 20 relative to the inner frame 30 can be reduced.

Also, in this example, surfaces of the first inner protrusions 35 and surfaces of the second inner protrusions 36 are curved such that the centers of those surfaces are swollen toward the inside of the inner frame 30. In other words, the surfaces of the first inner protrusions 35 and the surfaces of the second inner protrusions 36 are each curved to form a part of a surface of a sphere or an ellipsoid. For that reason, the light guide plate 20 can be easily fitted into the inner frame 30.

As illustrated in FIG. 2, the outer periphery (surface facing the inner peripheral surface of the outer frame 40) of the inner frame 30 has plural protrusions 37 and 38 formed thereon and projecting toward the inner periphery of the outer peripheral wall (wall parts 41, 42, 43, and 44 described above) of the outer frame 40. Those protrusions 37 and 38 are also molded integrally with the inner frame 30 as with the inner protrusions 35 and 36.

The respective protrusions 37 and 38 are formed on two sides (two wall parts) of the inner frame 30 which are located opposite to each other. In this example, the protrusions 37 (hereinafter referred to as "first outer protrusions") of the same number (two in this example) as that of the first inner protrusions 35 are formed on the right wall part 33, and each of the first outer protrusions 37 is paired with the adjacent first inner protrusion 35. Those two first outer protrusions 37 are located at a distance from each other in the longitudinal direction of the right wall part 33. Also, the left wall part 34 opposite to the right wall part 33 has the protrusions 38 (hereinafter referred to as "second outer protrusions") of the same number (two in this example) as that of the second inner protrusions 36. Each of the second outer protrusions 38 is paired with the adjacent second inner protrusion 36. Those two second outer protrusions 38 are located at a distance from each other in the longitudinal direction of the left wall part 34.

Further, in this example, the position of the second outer protrusions 38 in the longitudinal direction of the left wall part 34 matches the position of the first outer protrusions 37 in the longitudinal direction of the right wall part 33. That is, the first outer protrusions 37 and the second outer protrusions 38 are located symmetrically about a center line C2 of the inner frame 30 in the lateral direction.

The outer protrusions 37 and 38 are engaged with the right and left wall parts 43 and 44 of the outer frame 40, respectively. In more detail, as illustrated in FIGS. 1 and 3, the right and left wall parts 43 and 44 has plural engagement holes 40a formed thereon and positioned in correspondence with the outer protrusions 37 and 38.

The outer protrusions 37 and 38 are fitted into the engagement holes 40a. In this example, the outer protrusions 37 and 38 are formed in a substantially rectangular solid, unlike the shape of the inner protrusions 35 and 36. For that reason, the outer protrusions 37 and 38 hardly drop out of the engagement holes 40a as compared with the configuration in which the surface of the outer protrusions 37 and 38 are curved such that the center of the surface thereof is swollen.

In this example, as illustrated in FIG. 2, an inner width W2 of the outer frame 40 is commensurate with an outer width (a distance between an outer surface of the right wall part 33 and an outer surface of the left wall part 34) of the inner frame 30. Therefore, the right and left side surfaces of the inner frame 30 are abutted against the inner periphery of the outer frame 40 and thereby the positional displacement of the inner frame 30 relative to the outer frame 40 can be restricted.

As illustrated in FIG. 2, the first inner protrusions 35 and the first outer protrusions 37 are located on opposite sides to each other across one side part (right wall part 33 in this example) of the inner frame 30. That is, the first inner protrusions 35 and the first outer protrusions 37 are located inside and outside the right wall part 33, respectively. Also, the first inner protrusions 35 and the first outer protrusions 37 are located at distances from each other in the longitudinal direction of the right wall part 33. That is, the first inner protrusions 35 are located at distances in the longitudinal direction from positions symmetrical to the first outer protrusions 37 about the right wall part 33.

Further, as illustrated in FIG. 4, the first inner protrusions 35 and the first outer protrusions 37 have no overlapped portion in the longitudinal direction of the right wall part 33. That is, any portion of the first inner protrusions 35 is not located opposite to the first outer protrusions 37. For that reason, a distance A is provided between an end (end toward the first outer protrusion 37) of one first inner protrusion 35 and an end (end toward the first inner protrusion 35) of the first outer protrusion 37 in the longitudinal direction of the right wall part 33. Also, in this example, as illustrated in FIG. 2, a distance between the two first inner protrusions 35 is smaller than a distance between the two first outer protrusions 37.

In this way, the first inner protrusions 35 and the first outer protrusions 37 are located at the distances from each other in the longitudinal direction of the right wall part 33. For that reason, when fitting the inner frame 30, into which the light guide plate 20 has been fitted, into the outer frame 40, a portion D of the right wall part 33 on which the first outer protrusion 37 is formed can be recessed as indicated by a two-dot chain line in FIG. 4. In other words, the rigidity of the right wall part 33 (more specifically, the thickness of the right wall part 33, or the material of the inner frame 30) is designed so that the portion D of the right wall part 33 can be recessed. In the work of assembling the inner frame 30 and the outer frame 40 together, the portions D of the right wall part 33 are recessed once, and the first outer protrusions 37 can be fitted into the engagement holes 40a of the outer frame 40.

Also, in this example, the surfaces of the first inner protrusions 35 (surfaces facing the side surface of the light guide plate 20) are curved so that the center thereof is swollen, and therefore the right wall part 33 is easily recessed as compared with a structure in which the first inner protrusions 35 are each formed in the rectangular solid.

Further, as illustrated in FIG. 4, in this example, a protruded width W3 of each first inner protrusion 35 is larger than a width W4 of a portion of each first outer protrusion 37 which is fitted into the engagement hole 40a. For that reason, when the portion D of the right wall part 33 is recessed, the portion D is not abutted against the side surface 20a of the light guide plate 20.

As illustrated in FIG. 2, the second inner protrusions 36 and the second outer protrusions 38 are located on opposite sides to each other across the side part (left wall part 34) opposite to the side part (right wall part 33) on which the first inner protrusions 35 and the first outer protrusions 37 are formed. That is, the second inner protrusions 36 and the second outer protrusions 38 are located inside and outside the left wall part 34, respectively. The second inner protrusions 36 are located at positions symmetrical to the second outer protrusions 38 about the left wall part 34. That is, the second inner protrusions 36 and the second outer protrusions 38 are located at positions overlapped with each other in the longitudinal direction of the left wall part 34. In this example, a center line C1 of the second inner protrusions 36 in the longitudinal direction of the left wall part 34 matches a center line of the second outer protrusions 38.

For that reason, in a state where the light guide plate 20 is fitted into the inner frame 30, portions of the left wall part 34 where the second outer protrusions 38 are formed cannot be recessed because the second inner protrusions 36 become obstacles. As a result, the second outer protrusions 38 hardly come off from the engagement holes 40a.

The assembling of the light guide plate 20, the inner frame 30 and the outer frame 40 are conducted, for example, as follows. First, the light guide plate 20 is fitted into the inner frame 30. Then, the second outer protrusions 38 are fitted into the engagement holes 40a formed in the left wall part 44 of the outer frame 40. Thereafter, while the portion D of the right wall part 33 where each of the first outer protrusions 37 is formed is recessed, the first outer protrusions 37 are fitted into the engagement holes 40a formed in the right wall part 43 of the outer frame 40. The assembling of those members is not limited to the above procedure, but those members may be assembled together in other procedures.

As described above, in the backlight unit 10, the inner periphery of the inner frame 30 has the inner protrusions 35 and 36 formed thereon and projecting toward the outer periphery (side surfaces 20a in the above description) of the light guide plate 20. Also, the outer periphery of the inner frame 30 has the outer protrusions 37 and 38 formed thereon projecting toward the inner periphery of the outer frame 40. The first inner protrusions 35 and the first outer protrusions 37 are respectively located on opposite sides of one side part (right wall part 33) of the inner frame 30. Also, the first inner protrusions 35 and the first outer protrusions 37 are located at distances from each other in the longitudinal direction of the one side part of the inner frame 30.

According to the backlight unit 10, the positional displacement of the light guide plate 20 relative to the inner frame 30 can be suppressed by the inner protrusions 35 and 36. Also, the positional displacement of the inner frame 30 relative to the outer frame 40 can be suppressed by the outer protrusions 37 and 38.

Further, the first inner protrusions 35 and the first outer protrusions 37 are located at the distances from each other in the longitudinal direction of the right wall part 33 of the inner frame 30. Therefore, the portion of the inner frame 30 where each first outer protrusion 37 is formed can be recessed. For that reason, the ease of assembling the light guide plate 20, the inner frame 30, and the outer frame 40 can be ensured. In particular, even when the clearance between the inner frame 30 and the outer frame 40 is reduced, the inner frame 30 can be assembled into the outer frame 40 by depressing the right wall part 33 of the inner frame 30 partially. Further, by reducing the clearance between the inner frame 30 and the outer frame 40, the positional displacement of the inner frame 30 can be suppressed.

Also, in the liquid crystal display device 1, the liquid crystal display panel 2 is attached to the inner frame 30. For that reason, the position of the liquid crystal display panel 2 relative to the outer frame 40 becomes also appropriate. As a result, when the backlight unit 10 is mounted on an electronic device, and the outer frame 40 is fixed to the electronic device, a position of a display area in the electronic device (position of the liquid crystal display panel 2 in the electronic device) becomes also appropriate.

The present invention is not limited to the backlight unit 10 described above, but can be variously changed.

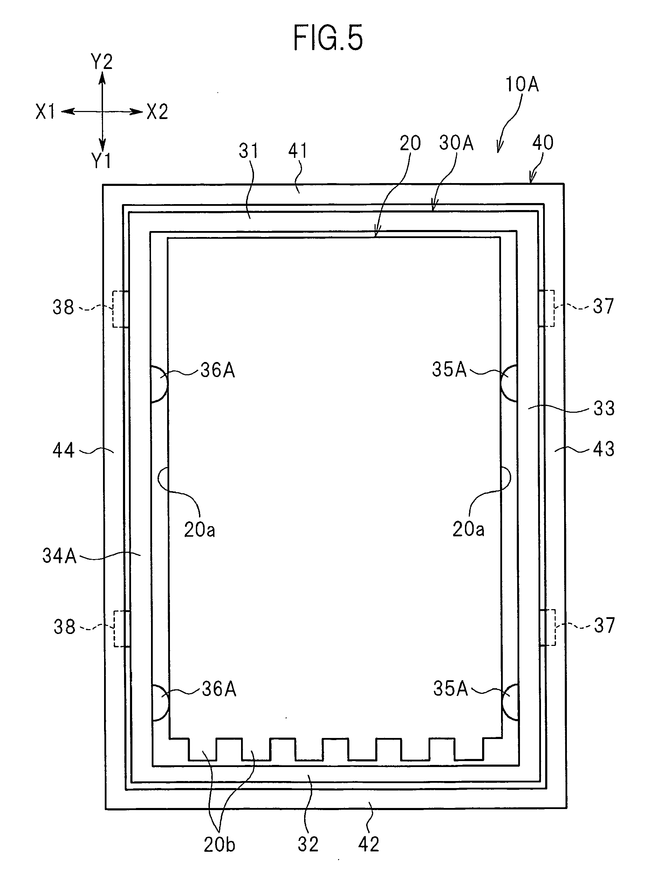

For example, in the above description, the distance between the two first inner protrusions 35 is smaller than the distance between the two first outer protrusions 37. As a result, the rear first inner protrusion 35 is located forward at the distance from the first outer protrusion 37, and the front first inner protrusion 35 is located rearward at the distance from the first outer protrusion 37 (as described above, Y1-Y2 direction in FIG. 1 indicates the front-rear direction). However, the two first inner protrusions 35 may be located at the distance from the paired first outer protrusions 37 in the same direction. FIG. 5 is a plan view of a backlight unit 10A not according to the invention. Referring to FIG. 5, the same parts as those in the backlight unit 10 described above are denoted by identical reference numerals, and their description will be omitted below.

In the backlight unit 10A, two first inner protrusions 35A are formed on the right wall part 33 of an inner frame 30A. Each of the first inner protrusions 35A is located forward at a distance from the paired outer protrusion 37. In an example illustrated in FIG. 5, a left wall part 34A of the inner frame 30A has two second inner protrusions 36A formed thereon. In this example, each of the second inner protrusions 36A is located forward at the distance from the paired second outer protrusion 38.

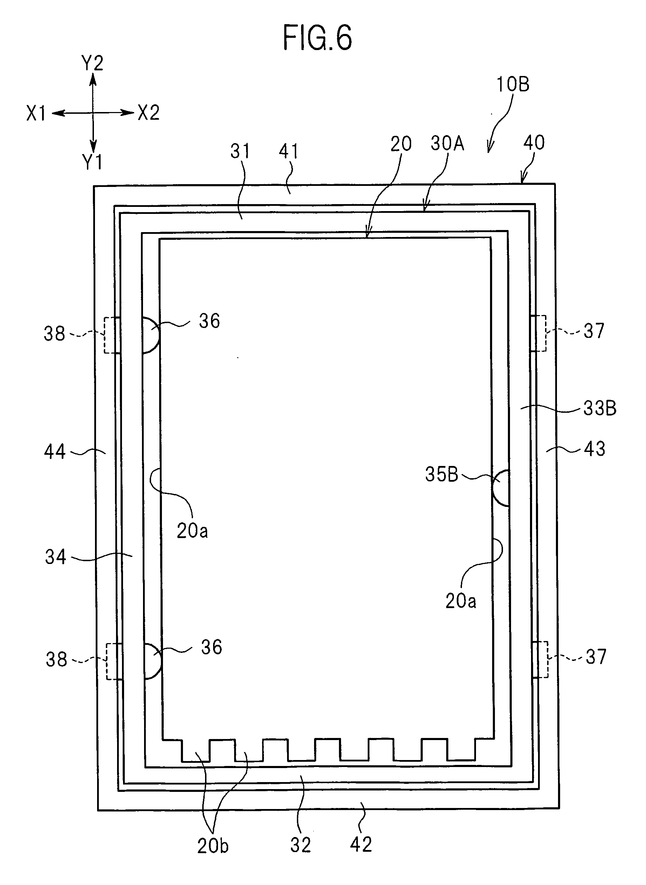

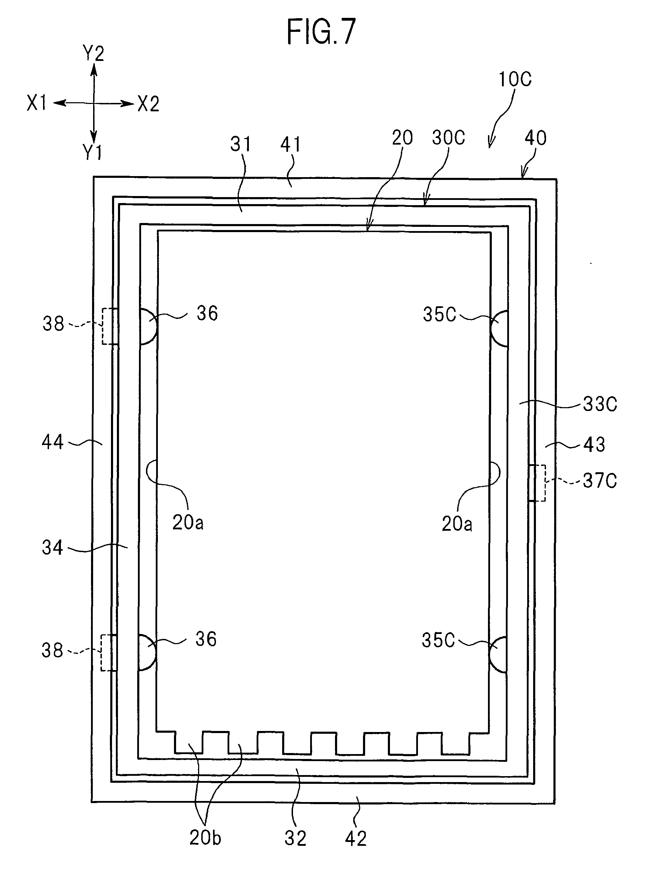

Also, in the above description, the inner frame 30 has the first inner protrusions 35 of the same number as that of the first outer protrusions 37, and the respective first inner protrusions 35 are so arranged as to be paired with the first outer protrusions 37, that is, to be particularly closer to any first outer protrusion 37. However, the number of the first outer protrusions 37 may not be the same as that of the first inner protrusions 35. FIGS. 6 and 7 are plan views of backlight units 10B and 10C according to this embodiment, respectively. Similarly, in those figures, the same parts as those in the backlight unit 10 are denoted by identical reference numerals, and their description will be omitted below.

As illustrated in FIG. 6, in the backlight unit 10B, a right wall part 33B of an inner frame 30B has plural (two in FIG. 6) the first outer protrusions 37 formed thereon. Also, the right wall part 33B has a first inner protrusion 35B formed thereon and smaller in number than the first outer protrusions 37. More specifically, in the example of FIG. 6, one first inner protrusion 35B is formed on the right wall part 33B. The first inner protrusion 35B is located at the same distance from the two first outer protrusions 37. Incidentally, when a larger number of the first inner protrusions 35B and a larger number of the first outer protrusions 37 are provided, each of the first inner protrusions 35B may be located at the same distance from the two adjacent first outer protrusions 37.

As illustrated in FIG. 7, in the backlight unit 10C, plural (two in FIG. 7) first inner protrusions 35C are formed on a right wall part 33C of an inner frame 30C. Also, the right wall part 33C has a first outer protrusion 37C formed thereon and smaller in number than the first inner protrusions 35C. More specifically, in the example of FIG. 7, one first outer protrusion 37C is formed on the right wall part 33C. The two first inner protrusions 35C are located at the same distance from the first outer protrusion 37C. Similarly, in this embodiment, when a larger number of the first inner protrusions 35C and a larger number of the first outer protrusions 37C are provided, each of the first inner protrusions 35C may be located at the same distance from the two adjacent first outer protrusions 37C.

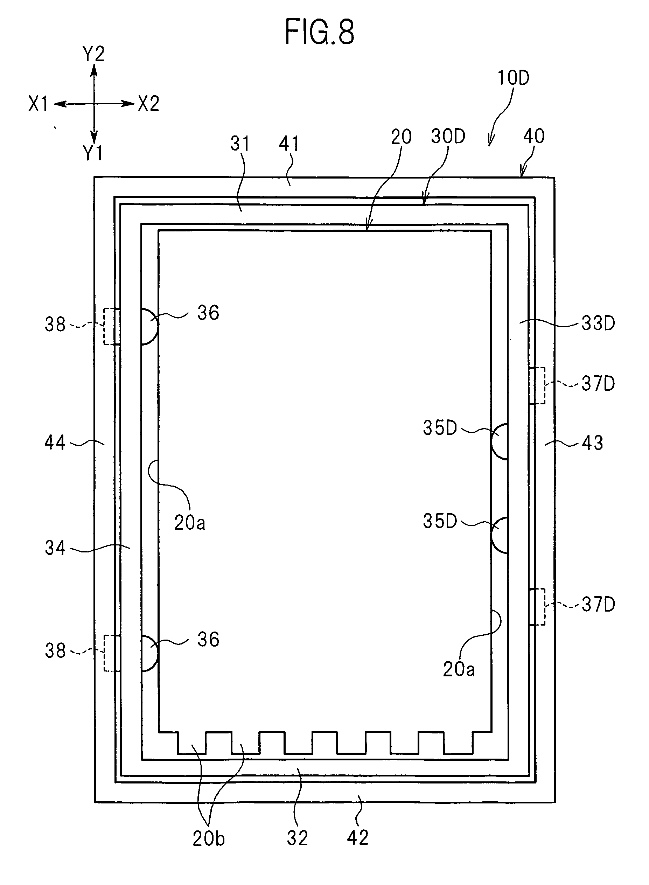

Also, in the backlight unit 10, the first outer protrusions 37 formed on the right wall part 33 and the second outer protrusions 38 formed on the left wall part 34 are located to be symmetrical about the center line C2 in the lateral direction of the inner frame 30. However, one of the first outer protrusions 37 and the second outer protrusions 38 may be displaced forward or rearward from the other one. FIG. 8 is a plan view of a backlight unit 10D according to this embodiment. Similarly, in this figure, the same parts as those in the backlight unit 10 are denoted by identical reference numerals, and their description will be omitted below.

In the backlight unit 10D, similar to the backlight unit 10, plural (two in FIG. 8) first outer protrusions 37D are formed on a right wall part 33D. Positions of the first outer protrusions 37D in the length direction (longitudinal direction) of the wall part 33D and 34 are displaced forward or rearward from the positions of the second outer protrusions 38 formed on the left wall part 34. More specifically, the rear first outer protrusion 37D is displaced forward, and the front first outer protrusion 37D is displaced rearward. For that reason, a distance between the two first outer protrusions 37D is smaller than a distance between the two second outer protrusions 38. In the backlight unit 10D, two first inner protrusions 35D are disposed further inside the two first outer protrusions 37D.

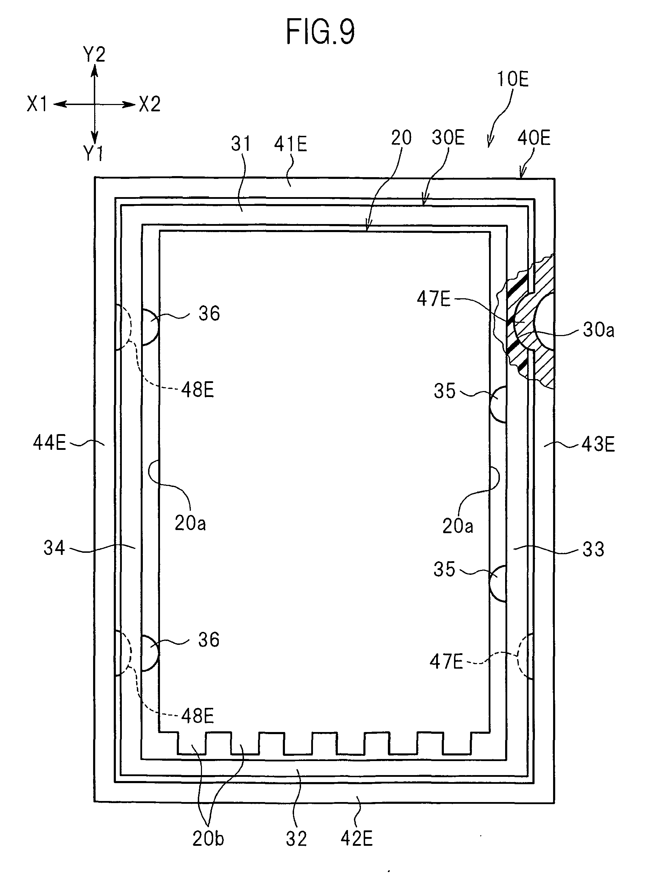

Also, in the above description, the first outer protrusions 37 and the second outer protrusions 38 are formed on the outer periphery of the inner frame 30. However, the first outer protrusions 37 and the second outer protrusions 38 may be formed on the inner periphery of the outer peripheral wall of the outer frame 40. FIG. 9 is a plan view of a backlight unit 10E according to this embodiment.

The backlight unit 10E, not according to the invention, has an outer frame 40E. The outer frame 40E includes an upper wall part 41E, a lower wall part 42E, a right wall part 43E, and a left wall part 44E. The upper wall part 41E, the lower wall part 42E, the right wall part 43E, and the left wall part 44E surround an inner frame 30E. The right wall part 43E has plural (two in FIG. 9) first outer protrusions 47E formed thereon and projecting toward the outer periphery of an inner frame 30E (more specifically, outer surface of the right wall part 33E). The left wall part 44E has plural (two in FIG. 9) second outer protrusions 48E formed thereon and projecting toward the outer periphery of the inner frame 30E (more specifically, outer surface of the left wall part 34).

The first outer protrusions 47E and the second outer protrusions 48E are engaged with the outer periphery of the inner frame 30E. More specifically, engagement holes 30a are each formed in the outer surface of the right wall part 33 of the inner frame 30E and in the outer surface of the left wall part 34. The first outer protrusions 47E and the second outer protrusions 48E are fitted into the respective engagement holes 30a.

The inner frame 30E has the first inner protrusions 35 and the second inner protrusions 36. The first inner protrusions 35 and the first outer protrusions 47E are located on opposite sides to each other across the right wall part 33E of the inner frame 30E, and also located at distances from each other in the longitudinal direction of the right wall part 33E. For that reason, in fitting the inner frame 30E into the outer frame 40E, a portion of the right wall part 33E against which each of the first outer protrusions 47E is abutted can be recessed whereby the ease of assembling can be ensured. On the other hand, the second inner protrusions 36 and the second outer protrusions 48E are located symmetrically about the left wall part 34 of the inner frame 30E.

Also, in the backlight unit 10, the second outer protrusions 38 and the second inner protrusions 36 are located opposite to the first outer protrusions 37 and the first inner protrusions 35. However, the second outer protrusions 38 and the second inner protrusions 36 may not be provided. In this case, the light guide plate 20 and the left wall part 34 of the inner frame 30 are abutted directly against each other, to thereby suppress the positional displacement of the light guide plate 20 relative to the inner frame 30. Also, the left wall part 34 of the inner frame 30 and the left wall part 44 of the outer frame 40 are abutted directly against each other, to thereby suppress the positional displacement of the inner frame 30 relative to the outer frame 40.

While there have been described what are at present considered to be certain embodiments of the invention, it will be understood that various modifications may be made thereto, and the appended claims cover all such modifications and define the scope of the invention.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A backlight unit, comprising:
a light guide plate (20);
an inner frame (30) including wall parts (31 - 34) that surrounds an outer periphery of the light guide plate (20); and
an outer frame (40) including an inner peripheral surface that surrounds an outer periphery of the inner frame (30),
wherein
the wall parts include a first wall part (33) and a second wall part (34) which is opposed to the first wall part (33),
the inner peripheral surface includes a first inner surface and a second inner surface which is opposed to the first inner surface,
the first inner surface is located along the first wall part (33),
the second inner surface is located along the second wall part (34),
the first wall part (33) of the inner frame (30) has a first inner protrusion (35) formed thereon and projecting toward the outer periphery (20a) of the light guide plate (20),
the second wall part (34) of the inner frame (30) has a second inner protrusion (36) formed thereon and projecting toward the outer periphery (20a) of the light guide plate (20),
the first wall part (33) of the inner frame (30) has a first outer protrusion (37) formed thereon and projecting toward the first inner surface, and
the second wall part (34) of the inner frame (30) has a second outer protrusion (38) formed thereon and projecting toward the second inner surface,
the first outer protrusion (37) is fitted into a first engagement hole (40a) which is formed in the first inner surface,
the second outer protrusion (38) is fitted into a second engagement hole (40a) which is formed in the second inner surface,
the second inner protrusion (36) and the second outer protrusion (38) are located opposite to each other across the second side wall part (34) of the inner frame (30),
the first inner protrusion (35) and the first outer protrusion (37) are arranged at a distance from each other in a longitudinal direction of the first wall part (33) of the inner frame (30) ; **characterized in that**
the first wall part (33) can be elastically deformed so that a part thereof can be recessed and the first outer protrusion (37) can be fitted into the first engagement hole (40a).

2. The backlight unit according to claim 1, wherein
the first and second inner protrusions (35, 36) are abutted against the outer periphery (20a) of the light guide plate (20).

3. The backlight unit according to claim 1 or 2, wherein
a plurality of first and second inner protrusions (35A, 36A) that each functions as the inner protrusion are formed on the inner periphery of the inner frame (30).

4. The backlight unit according to one of the preceding claims, wherein
the inner periphery of the outer frame (40) has a plurality of first and second outer protrusions (37, 38) each functioning as the outer protrusion.

5. The backlight unit according to claim 1, wherein
the second inner protrusion (36) and the second outer protrusion (38) are located symmetrically about a center line (C2) of the inner frame (30) in the lateral direction.

6. A liquid crystal display device comprising the backlight unit according to claim 1.

## Patentansprüche

1. Rückbeleuchtungseinheit mit:
einer Lichtführungsplatte (20);
einem inneren Rahmen (30) mit Wandteilen (31 - 34), welcher einen Außenumfang der Lichtführungsplatte (20) umgibt; und
einem äußeren Rahmen (40) mit einer Innenumfangsfläche, der einen Außenumfang des inneren Rahmens (30) umgibt,
wobei
die Wandteile ein erstes Wandteil (33) und ein zweites Wandteil (34), das dem ersten Wandteil (33) gegenüberliegt, einschließen,
die Innenumfangsfläche eine erste Innenfläche und eine zweite Innenfläche, die der ersten Innenfläche gegenüberliegt, einschließt,
sich die erste Innenfläche entlang des ersten Wandteils (33) befindet,
sich die zweite Innenfläche entlang des zweiten Wandteils (34) befindet,
das erste Wandteil (33) des inneren Rahmens (30) einen ersten inneren Vorsprung (35) aufweist, der auf ihm ausgebildet ist und zum Außenumfang (20a) der Lichtführungsplatte (20) vorsteht,
das zweite Wandteil (34) des inneren Rahmens einen zweiten inneren Vorsprung (36) aufweist, der auf ihm ausgebildet ist und zum Außenumfang (20a) der Lichtführungsplatte (20) vorsteht,
das erste Wandteil (33) des inneren Rahmens (30) einen ersten äußeren Vorsprung (37) aufweist, der auf ihm ausgebildet ist und zur ersten Innenfläche vorsteht, und
das zweite Wandteil (34) des inneren Rahmens (30) einen zweiten äußeren Vorsprung (38) aufweist, der auf ihm ausgebildet ist und zur zweiten Innenfläche vorsteht,
der erste äußere Vorsprung (37) in ein erstes Eingriffsloch (40a) eingepasst ist, das in der ersten Innenfläche ausgebildet ist,
der zweite äußere Vorsprung (38) in ein zweites Eingriffsloch (40a) eingepasst ist, das in der zweiten Innenfläche ausgebildet ist,
der zweite innere Vorsprung (36) und der zweite äußere Vorsprung (38) einander über das zweite Seitenwandteil (34) des inneren Rahmens (30) gegenüberliegen,
der erste innere Vorsprung (35) und der erste äußere Vorsprung (37) in einem Abstand voneinander in Längsrichtung des ersten Wandteils (33) des inneren Rahmens (30) angeordnet sind;
**dadurch gekennzeichnet, dass**
das erste Wandteil (33) elastisch verformt werden kann, so dass ein Teil desselben vertieft werden kann und der erste äußere Vorsprung (37) in das erste Eingriffsloch (40a) eingepasst werden kann.

2. Rückbeleuchtungseinheit nach Anspruch 1, wobei
der erste und zweite innere Vorsprung (35, 36) gegen den Außenumfang (20a) der Lichtführungsplatte (20) stoßen.

3. Rückbeleuchtungseinheit nach Anspruch 1 oder 2, wobei
mehrere erste und zweite innere Vorsprünge (35A, 36A), die jeweils als der innere Vorsprung fungieren, auf dem Innenumfang des inneren Rahmens (30) ausgebildet sind.

4. Rückbeleuchtungseinheit nach einem der vorhergehenden Ansprüche, wobei
der Innenumfang des äußeren Rahmens (40) mehrere erste und zweite äußere Vorsprünge (37, 38) aufweist, die jeweils als der äußere Vorsprung fungieren.

5. Rückbeleuchtungseinheit nach Anspruch 1, wobei
der zweite innere Vorsprung (36) und der zweite äußere Vorsprung (38) symmetrisch um eine Mittellinie (C2) des inneren Rahmens (30) in seitlicher Richtung positioniert sind.

6. Flüssigkristallanzeigevorrichtung mit der Rückbeleuchtungseinheit nach Anspruch 1.

## Revendications

1. Unité de rétroéclairage comprenant :
une plaque de guide de lumière (20) ;
un cadre intérieur (30) incluant des parties de paroi (31 - 34) qui entoure une partie périphérique extérieure de la plaque de guide de lumière (20) ; et
un cadre extérieur (40) incluant une surface périphérique intérieure qui entoure une partie périphérique extérieure du cadre intérieur (30),
dans laquelle
les parties de paroi incluent une première partie de paroi (33) et une deuxième partie de paroi (34) qui est opposée à la première partie de paroi (33),
la surface périphérique intérieure inclut une première surface intérieure et une deuxième surface intérieure qui est opposée à la première surface intérieure,
la première surface intérieure est située le long de la première partie de paroi (33),
la deuxième surface intérieure est située le long de la deuxième partie de paroi (34),
la première partie de paroi (33) du cadre intérieur (30) possède une première protubérance intérieure (35) formée sur celle-ci et s'avançant vers la partie périphérique extérieure (20a) de la plaque de guide de lumière (20),
la deuxième partie de paroi (34) du cadre intérieur (30) possède une deuxième protubérance intérieure (36) formée sur celle-ci et s'avançant vers la partie périphérique extérieure (20a) de la plaque de guide de lumière (20),
la première partie de paroi (33) du cadre intérieur (30) possède une première protubérance extérieure (37) formée sur celle-ci et s'avançant vers la première surface intérieure, et
la deuxième partie de paroi (34) du cadre intérieur (30) possède une deuxième protubérance extérieure (38) formée sur celle-ci et s'avançant vers la deuxième surface intérieure,
la première protubérance extérieure (37) est introduite dans un premier trou d'accouplement (40a) qui est formé dans la première surface intérieure,
la deuxième protubérance extérieure (38) est introduite dans un deuxième trou d'accouplement (40a) qui est formé dans la deuxième surface intérieure,
la deuxième protubérance intérieure (36) et la deuxième protubérance extérieure (38) sont disposées face à face par rapport à la deuxième partie de paroi latérale (34) du cadre intérieur (30),
la première protubérance intérieure (35) et la première protubérance extérieure (37) sont disposées à une distance l'une de l'autre dans une direction longitudinale de la première partie de paroi (33) du cadre intérieur (30) ; **caractérisée en ce que**
la première partie de paroi (33) peut être élastiquement déformée de sorte qu'une partie de celle-ci puisse être incurvée et la première protubérance extérieure (37) peut être introduite dans le premier trou d'accouplement (40a).

2. Unité de rétroéclairage selon la revendication 1, dans laquelle
les premières et deuxièmes protubérances intérieures (35, 36) viennent buter contre la partie périphérique extérieure (20a) de la plaque de guide de lumière (20).

3. Unité de rétroéclairage selon la revendication 1 ou 2, dans laquelle
une pluralité de premières et deuxièmes protubérances intérieures (35A, 36A) qui fonctionnent chacune comme la protubérance intérieure sont formées sur la partie périphérique intérieure du cadre intérieur (30).

4. Unité de rétroéclairage selon l'une des revendications précédentes, dans laquelle
la partie périphérique intérieure du cadre extérieur (40) possède une pluralité de premières et deuxièmes protubérances extérieures (37, 38) fonctionnant chacune comme la protubérance extérieure.

5. Unité de rétroéclairage selon la revendication 1, dans laquelle
la deuxième protubérance intérieure (36) et la deuxième protubérance extérieure (38) sont disposées de manière symétrique par rapport à une ligne centrale (C2) du cadre intérieur (30) dans la direction latérale.

6. Dispositif d'affichage à cristaux liquides comprenant l'unité de rétroéclairage selon la revendication 1.
